# EUROPÄISCHE PATENTSCHRIFT

(11) **EP 3 892 486 B1**
(45) Veröffentlichungstag und Bekanntmachung des Hinweises auf die Patenterteilung: **28.12.2022**
(21) Anmeldenummer: 21161161.1
(22) Anmeldetag: 08.03.2021
(51) Int. Cl.: B60K 15/01

(54) **TANKANSCHLUSSBAUGRUPPE**
TANK CONNECTION ASSEMBLY
MODULE DE RACCORDEMENT DU RÉSERVOIR

(30) Priorität: 08.04.2020 DE 102020109871
(43) Veröffentlichungstag der Anmeldung: 13.10.2021
(73) Patentinhaber: Eberspächer Climate Control Systems GmbH, 73730 Esslingen (DE)
(72) Erfinder: Colak, Ziya Seyhan, 68163 Mannheim (DE); Heubach, Armin, 70569 Stuttgart (DE); Weber, Robert, 71069 Sindelfingen (DE)
(74) Vertreter: Ruttensperger Lachnit Trossin Gomoll

(56) Entgegenhaltungen:
- DE-A1- 19 846 297
- DE-A1-102008 034 375
- DE-B3-102016 010 034
- KR-U- 19980 023 868

## Beschreibung

Die vorliegende Erfindung betrifft eine Tankanschlussbaugruppe, welche beispielsweise an einem Tank eines Kraftfahrzeugs festgelegt werden kann, um aus dem Tank zu entnehmenden Brennstoff zu einem brennstoffbetriebenen Fahrzeugheizgerät leiten zu können.

Aus der DE 10 2016 010 034 B3 ist eine Tankanschlussbaugruppe bekannt, bei welcher ein Außengewinde-Spannelement an einem Anschlussrohr festgelegt ist. Ein das Außengewinde-Spannelement umgebendes, hülsenartiges Spreiz/Dicht-Element ist aus elastischem Material aufgebaut und stützt sich mit einem ersten Endbereich in Richtung einer Rohrlängsachse des Anschlussrohrs am Außengewinde-Spannelement ab. Ein mit dem Außengewinde-Spannelement in Gewindeeingriff stehendes Innengewinde-Spannelement beaufschlagt über eine Kompressionsscheibe das andere axiale Ende des Spreiz/Dicht-Elements. Durch Verdrehen des Innengewinde-Spannelements bezüglich des Außengewinde-Spannelements wird das Spreiz/Dicht-Element axial komprimiert und dabei radial aufgespreizt.

Zur Festlegung dieser Tankanschlussbaugruppe an einer Tankwandung eines Tanks wird das Anschlussrohr mit dem daran festgelegten Außengewinde-Spannelement und dem das Außengewinde-Spannelement umgebenden Spreiz/Dicht-Element durch eine Tanköffnung in der Tankwandung hindurchgeführt, bis ein am zweiten axialen Ende des Spreiz/Dicht-Elements gebildeter, nach radial außen vorspringender Flanschbereich an der Tankwandung anliegt. Daraufhin wird das Innengewinde-Spannelement verdreht, so dass das Spreiz/Dicht-Element axial komprimiert wird und sich dabei radial ausbaucht bzw. radial aufgespreizt ist. Dadurch umgreift das Spreiz/Dicht-Element die Tankwandung in einem die Tanköffnung umgebenden Wandungsbereich an beiden axialen Seiten und hält somit die Tankanschlussbaugruppe an der Tankwandung.

Es ist die Aufgabe der vorliegenden Erfindung, eine Tankanschlussbaugruppe, insbesondere für ein brennstoffbetriebenes Fahrzeugheizgerät, vorzusehen, bei welcher eine zuverlässige, gegen den Austritt von Brennstoff dichte Befestigung an einer Tankwandung gewährleistet werden kann.

Erfindungsgemäß wird diese Aufgabe gelöst durch eine Tankanschlussbaugruppe, insbesondere für ein brennstoffbetriebenes Fahrzeugheizgerät, umfassend ein durch eine Tanköffnung in einer Tankwandung hindurchzuführendes, in Richtung einer Rohrlängsachse sich erstreckendes Anschlussrohr und eine Befestigungsbaugruppe an dem Anschlussrohr zur Festlegung an der Tankwandung im Bereich der Tanköffnung, wobei die Befestigungsbaugruppe umfasst:
- ein an dem Anschlussrohr festgelegtes erstes Spannelement,
- ein zweites Spannelement, wobei das zweite Spannelement mit dem ersten Spannelement derart in Eingriff steht oder bringbar ist, dass eine Drehung des zweiten Spannelements bezüglich des ersten Spannelements um die Rohrlängsachse eine Bewegung des zweiten Spannelements bezüglich des ersten Spannelements in Richtung der Rohrlängsachse bewirkt,
- ein an dem Anschlussrohr in axialem Abstand zu dem ersten Spannelement wenigstens in Richtung von dem ersten Spannelement weg festgelegtes Spreizelement zur Abstützung an einer ersten Seite einer Tankwandung,
- ein zwischen dem ersten Spannelement und dem Spreizelement axial bewegbar angeordnetes, bezüglich des ersten Spannelements axial in Richtung von dem Spreizelement weg über das zweite Spannelement abstützbares oder abgestütztes Widerlagerelement mit einem ersten Dichtbereich zum Bereitstellen eines dichten Abschlusses bezüglich einer Außenumfangsfläche des Anschlussrohrs und einem zweiten Dichtbereich zum Bereitstellen eines dichten Abschlusses bezüglich einer von der ersten Seite abgewandten zweiten Seite der Tankwandung.

Da der erfindungsgemäße Aufbau die Verformung bzw. Aufspreizung eines sowohl die Dichtwirkung bezüglich einer Tankwandung, als auch die Befestigung an der Tankwandung realisierenden, elastisch verformbaren Bauteils vermeidet, wird einerseits eine stabile Fixierung der Tankanschlussbaugruppe bezüglich der Tankwandung über eine lange Betriebslebensdauer hinweg gewährleistet, andererseits kann durch die Trennung der Befestigungsfunktion einerseits und der Dichtfunktion andererseits dadurch, dass das Spreizelement selbst in die Dichtfunktion nicht involviert ist, auch ein zuverlässig dichter Abschluss im Bereich der Tanköffnung gewährleistet werden. Eine derartige Tankanschlussbaugruppe ermöglicht es, beim nachträglichen Einbau eines brennstoffbetriebenen Fahrzeugheizgeräts in ein Fahrzeug, welches zunächst keine bauliche Vorkehrung aufweist, um das Fahrzeugheizgerät aus dem in dem Fahrzeug vorgesehenen Tank mit Brennstoff zu speisen, dies in einfacher Weise dadurch zu realisieren, dass in den im Fahrzeug vorgesehenen Tank eine Tanköffnung eingebracht wird und im Bereich dieser Tanköffnung dann die den zuverlässigen und dichten Abschluss gewährleistende erfindungsgemäß aufgebaute Tankanschlussbaugruppe am Tank festgelegt wird.

Bei einer baulich einfach zu realisierenden Ausgestaltung kann das Spreizelement einen das Anschlussrohr umgebenden, ringartigen Befestigungsbereich und eine Mehrzahl von mit Umfangsabstand zueinander angeordneten und von dem Befestigungsbereich sich auf das erste Spannelement zu erstreckenden, radialelastischen Spreizschenkeln umfassen, wobei an jedem Spreizschenkel ein nach radial außen hervorstehender Widerhakenbereich vorgesehen ist.

Um einerseits durch das Spreizelement eine stabile Abstützung bezüglich der Tankwandung zu gewährleisten, andererseits das Hindurchführen durch die Tanköffnung zu ermöglichen, wird vorgeschlagen, dass jeder Widerhakenbereich eine von dem Befestigungsbereich abgewandt orientierte Widerhaken-Abstützseite zur Abstützung an der ersten Seite der Tankwandung in einem die Tanköffnung umgebenden Wandungsbereich umfasst, oder/und dass jeder Widerhakenbereich eine dem Befestigungsbereich zugewandte Einführschräge umfasst.

Um für das Spreizelement die zur Erlangung der Wechselwirkung mit der Tankwandung erforderliche Spreizwirkung in einfacher Weise bereitstellen zu können, kann das Widerlagerelement einen ringscheibenartigen Widerlagerelementkörper umfassen, wobei an einer dem Spreizelement zugewandten ersten Axialseite des Widerlagerelementkörpers ein in Richtung auf das Spreizelements zu hervorstehender, von dem Widerlagerelementkörper weg auf das Spreizelement zu sich verjüngender Spreizansatz vorgesehen ist.

Zum Vermeiden einer übermäßigen Aufspreizung des Spreizelements kann an jedem Spreizschenkel ein in Richtung vom Befestigungsbereich weg über den Widerhakenbereich hinaus sich erstreckender Aufspreizbegrenzungsabschnitt vorgesehen sein.

Dabei kann für eine in Umfangsrichtung gleichmäßige Spreizwirkung vorgesehen sein, dass der Spreizansatz das Anschlussrohr ringartig umgibt, oder/und dass der Spreizansatz sich in Richtung auf das Spreizelement zu im Wesentlichen konisch verjüngend ausgebildet ist.

Um das Einführen der Befestigungsbaugruppe in die Tanköffnung in einfacher Weise realisieren zu können, kann das Widerlagerelement in einer Montage-Vorbereitungsposition bezüglich des ersten Spannelements derart abstützbar sein, dass der Spreizansatz das Spreizelement axial im Wesentlichen nicht überlappt oder/und das Spreizelement nicht nach radial außen aufspreizt oder/und eine Verformung des Spreizelements nach radial innen zulässt.

Zur Bereitstellung des ersten Dichtbereichs kann an dem Widerlagerelementkörper an einer Anschlussrohr-Aufnahmeöffnung eine nach radial innen offene, die Rohrlängsachse ringartig umgebende und ein erstes ringartiges Dichtelement aufnehmende erste Dichtelement-Aufnahmeaussparung vorgesehen sein.

Zur Bereitstellung des zweiten Dichtbereichs kann an der ersten Axialseite des Widerlagerelementkörpers eine zur ersten Axialseite offene, die Rohrlängsachse ringartig umgebende und ein zweites ringartiges Dichtelement aufnehmende zweite Dichtelement-Aufnahmeaussparung vorgesehen sein. Das erste Dichtelement kann bei an der Tankwandung festgelegter Tankanschlussbaugruppe in der ersten Dichtelement-Aufnahmeaussparung derart komprimiert sein, dass dieses am Widerlagerelementkörper und an der zweiten Seite der Tankwandung abgestützt und dazwischen komprimiert ist, und dass andererseits zur Erlangung einer definierten Positionierung der Tankanschlussbaugruppe bezüglich der Tankwandung der Widerlagerelementkörper mit seiner ersten Axialseite an der zweiten Seite der Tankwandung anliegt. Eine von der Elastizität des zweiten Dichtelements abhängige Positionierung der Tankanschlussbaugruppe bezüglich des Tanks wird dadurch vermieden.

Um auch hinsichtlich der Abdichtung bezüglich des Anschlussrohrs die Bereitstellung des dichten Abschlusses einerseits und die definierte Positionieren der Tankanschlussbaugruppe bezüglich des Tanks andererseits voneinander zu entkoppeln, wird vorgeschlagen, dass die erste Dichtelement-Aufnahmeaussparung an einer von der ersten Axialseite abgewandten zweiten Axialseite des Widerlagerelementkörpers axial offen ist, und dass axial zwischen dem Widerlagerelement und dem ersten Spannelement ein die zweite Axialseite des Widerlagerelementkörpers wenigstens im Bereich der ersten Dichtelement-Aufnahmeaussparung überdeckendes Kompressionselement angeordnet ist.

Bei einem stabil und kostengünstig zu realisierenden und insbesondere auch gegen die chemische Einwirkung von Brennstoff resistenten Aufbau wird vorgeschlagen, dass das Spreizelement ein Blechumformteil ist.

Für eine stabile Wechselwirkung zwischen den beiden Spannelementen wird vorgeschlagen, dass das erste Spannelement ein Außengewinde-Spannelement mit einem Außengewinde ist, und dass das zweite Spannelement ein Innengewinde-Spannelement mit einem mit dem Außengewinde in Gewindeeingriff stehenden Innengewinde ist.

Die Erfindung betrifft ferner eine Tankanordnung, insbesondere zur Versorgung eines brennstoffbetriebenen Fahrzeugheizgeräts mit Brennstoff, umfassend einen Tank mit einer Tankwandung und einer in der Tankwandung ausgebildeten Tanköffnung sowie eine an der Tankwandung im Bereich der Tanköffnung festgelegte, erfindungsgemäß aufgebaute Tankanschlussbaugruppe.

Die vorliegende Erfindung wird nachfolgend mit Bezug auf die beiliegenden Zeichnungen detailliert beschrieben. Es zeigt:
- Fig. 1: eine Seitenansicht einer Tankanschlussbaugruppe;
- Fig. 2: die Tankanschlussbaugruppe der Fig. 1 in Explosionsdarstellung;
- Fig. 3: in perspektivischer Ansicht ein Spreizelement der Tankanschlussbaugruppe der Fig. 1;
- Fig. 4: das Spreizelement der Fig. 3 in Seitenansicht;
- Fig. 5: die durch eine Tanköffnung in einer Tankwandung hindurchgeführte Tankanschlussbaugruppe der Fig. 1;
- Fig. 6: vergrößert das Detail VI in Fig. 5;
- Fig. 7: eine der Fig. 6 entsprechende Darstellung, bei welcher die Tankanschlussbaugruppe an einer Tankwandung festgelegt ist.

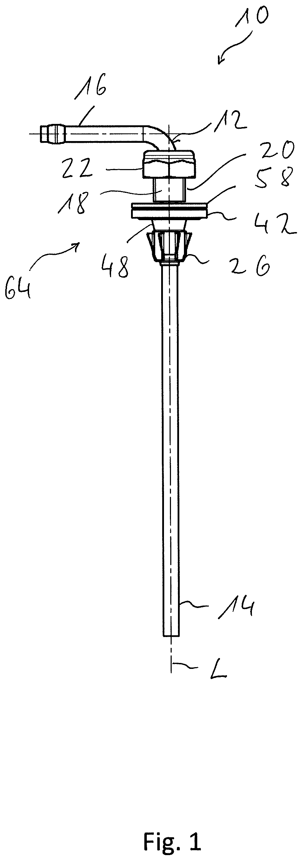

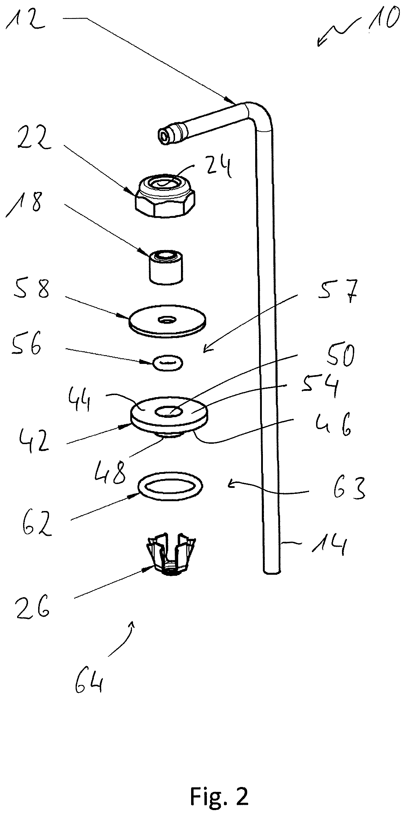

In den Fig. 1 bis 4 sind eine erfindungsgemäß aufgebaute Tankanschlussbaugruppe 10 bzw. deren Komponenten dargestellt. Die Tankanschlussbaugruppe 10 umfasst ein Anschlussrohr 12 mit einem in Richtung einer Rohrlängsachse L sich erstreckenden, durch eine Tanköffnung hindurch in einen Tank einzuführenden Rohrabschnitt 14 und einem bezüglich des Rohrabschnitts 14 beispielsweise angewinkelten und außerhalb eines Tanks zum Anschluss an eine Brennstoffleitung ausgebildeten Rohrabschnitt 16. Das Anschlussrohr 12 ist vorzugsweise als Metallrohr ausgebildet.

Die Tankanschlussbaugruppe 10 umfasst ferner ein hülsenartiges erstes Spannelement 18, das über den Rohrabschnitt 14 des Anschlussrohrs 12 geschoben und an einer dafür vorgesehenen Position beispielsweise durch Verschweißen festgelegt wird. Das erste Spannelement 18 ist als Außengewinde-Spannelement ausgebildet und weist an seinem Außenumfang ein Außengewinde 20 auf. Ein als selbstsichernde Mutter ausgebildetes zweites Spannelement 22 weist an seiner Innenumfangsfläche ein Innengewinde 24 auf, mit welchem es in Gewindeeingriff mit dem Außengewinde 20 des ersten Spannelements 18 gebracht werden kann, so dass eine Drehung des als Innengewinde-Spannelement ausgebildeten zweiten Spannelements 22 um die Rohrlängsachse L zu einer Verlagerung des zweiten Spannelements 22 bezüglich des ersten Spannelements 18 in Richtung der Rohrlängsachse L führt.

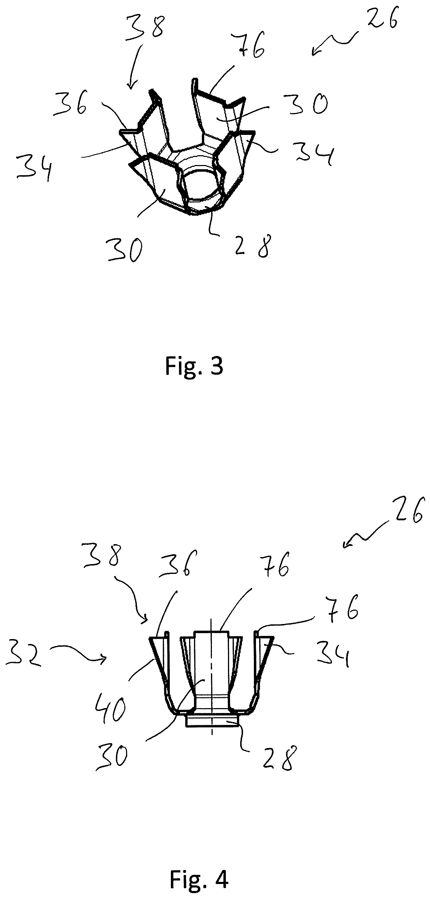

Die Tankanschlussbaugruppe 10 umfasst ferner ein vorzugsweise als Blechumformteil ausgebildetes Spreizelement 26. Das in den Fig. 3 und 4 deutlicher dargestellte Spreizelement 26 ist durch Ausschneiden bzw. Ausstanzen und Biegen eines Blechrohlings bereitgestellt und weist einen ringartigen bzw. teilweise hülsenartigen Befestigungsbereich 28 auf, mit welchem es den Rohrabschnitt 14 des Anschlussrohrs 12 umgebend positioniert werden kann und daran beispielsweise durch Verschweißung festgelegt werden kann. Alternativ könnte am Rohrabschnitt 14 ein bundartiger Vorsprungsbereich vorgesehen sein, an welchem das Spreizelement 26 mit seinem Befestigungsbereich 28 sich in Richtung von dem ersten Spannelement 18 weg abstützen kann.

Das Spreizelement 26 weist mehrere vom Befestigungsbereich 28 ausgehende und in Richtung der Rohrlängsachse L abgebogene Spreizschenkel 30 auf. Im dargestellten Beispiel sind die insgesamt vier Spreizschenkel 30 zueinander im Wesentlichen identisch ausgebildet und mit einem Winkelabstand von 90° zueinander vorgesehen, so dass jeweils zwei der Spreizschenkel 30 sich bezüglich der Rohrlängsachse L diametral gegenüberliegen.

An jedem Spreizschenkel 30 ist ein Widerhakenbereich 32 ausgebildet. Jeder Widerhakenbereich 32 weist zwei an den Spreizschenkeln 30 sich nach radial außen erstreckende Widerhakenelemente 34 auf. Jedes der Widerhakenelemente 34 weist an seiner vom Befestigungsbereich 28 abgewandten axialen Seite eine zur Rohrlängsachse L näherungsweise orthogonal stehende Widerhakenkante 36 auf. Die beiden Widerhakenkanten 36 jedes Spreizschenkels 30 bilden zusammen eine Widerhaken-Abstützseite 38 eines jeweiligen Widerhakenbereichs 32, mit welchem, wie nachfolgend beschrieben, ein jeweiliger Spreizschenkel 30 sich an einer Tankwandung abstützen kann. Dem Befestigungsbereich 28 zugewandt weist jeder Widerhakenabschnitt 34 jedes Widerhakenbereichs 32 eine Einführschräge 40 auf.

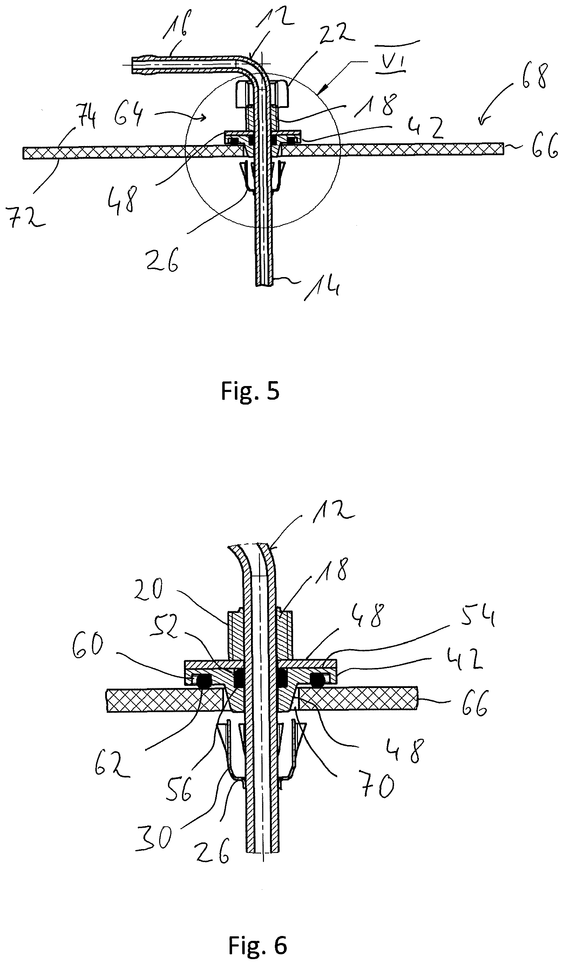

Die Tankanschlussbaugruppe 10 umfasst ferner axial zwischen dem ersten Spannelement 18 und dem Spreizelement 26 ein Widerlagerelement 42. Das Widerlagerelement 42 weist einen ringscheibenartigen Widerlagerelementkörper 44 auf. An einer dem Spreizelement 26 zugewandten ersten Axialseite 46 des Widerlagerelementkörpers 44 ist ein in Richtung vom Widerlagerelementkörper 44 weg und auf das Spreizelement 26 zu sich vorzugsweise im Wesentlichen konisch verjüngender Spreizansatz 48 vorgesehen. An einer zentralen Öffnung 50 des Widerlagerelements 42 ist eine in Fig. 6 erkennbare, nach radial innen offene Dichtelement-Aufnahmeaussparung 52 vorgesehen. Diese ist auch zu einer von der ersten Axialseite 46 abgewandten zweiten Axialseite 54 des Widerlagerelementkörpers 44 axial offen. In der die Rohrlängsachse L ringartig umgebenden ersten Dichtelement-Aufnahmeaussparung 52 ist ein beispielsweise als O-Ring ausgebildetes erstes Dichtelement 56 aufgenommen. Dieses kann beispielsweise grundsätzlich so dimensioniert sein, dass es unter Presspassung zwischen dem Widerlagerelementkörper 44 und dem Anschlussrohr 12 gehalten ist und in einem Grundzustand über die zweite axiale Seite 54 des Widerlagerelementkörpers 44 hervorsteht. Das Widerlagerelement 42 bildet zusammen mit dem ersten Dichtelement 56 im wesentlichen einen ersten Dichtbereich 57.

Axial zwischen dem Widerlagerelement 42 und dem ersten Spannelement 18 ist in ringscheibenartiges Kompressionselement 58 angeordnet. Dieses überdeckt den Widerlagerelementkörper 44 vorzugsweise vollständig. Bei einer axialen Beaufschlagung des Widerlagerelements 42 durch das zweite Spannelement 22 über das Kompressionselement 58 wird das erste Dichtelement 56 axial komprimiert, so dass es sich verstärkt radial gegen die Außenumfangsfläche des Rohrabschnitts 14 des Anschlussrohrs 12 und die Innenumfangsfläche der ersten Dichtelement-Aufnahmeaussparung legt und somit einen dichten Abschluss zwischen dem Widerlagerelement 42 und dem Anschlussrohr 12 bereitstellt. In diesem Zustand liegt das Kompressionselement 58 an der zweiten Axialseite 54 des Widerlagerelements 42 an.

An der ersten Axialseite 46 des Widerlagerelements 42 ist eine zu dieser ersten Axialseite 46 offene und die Öffnung 50 bzw. auch die Rohrlängsachse L ringartig umgebende zweite Dichtelement-Aufnahmeaussparung 60 vorgesehen. In der zweiten Dichtelement-Aufnahmeaussparung 60 ist ein beispielsweise als O-Ring ausgebildetes zweites Dichtelement 62 derart aufgenommen, dass es grundsätzlich axial über die erste Axialseite 46 des Widerlagerelementkörpers 44 hervorsteht. In dem vorangehend bereits beschriebenen Kompressionszustand, in welchem das Kompressionselement 58 das erste Dichtelement 56 komprimiert und dabei an der zweiten Axialseite des Widerlagerelementkörpers 44 anliegt, presst das Kompressionselement 58 den Widerlagerelementkörper 44 gegen eine nachfolgend erläuterte Tankwandung, wodurch das zweite Dichtelement 62 komprimiert wird und die erste Axialseite 46 des Widerlagerelements 42 an der Tankwandung in Anlage kommt. Das Widerlagerelement 42 bildet mit dem zweiten Dichtelement 62 im Wesentlichen eine zweite Dichtanordnung 63.

Das erste Spannelement 18, das zweite Spannelement 22, das Spreizelement 26, das Widerlagerelement 42 mit den beiden Dichtelementen 56, 62 und das Kompressionselement 58 bilden eine allgemein mit 64 bezeichnete Befestigungsbaugruppe der Tankanschlussbaugruppe 10, durch welche die Tankanschlussbaugruppe 10 bzw. das Anschlussrohr 12 an einer in den Fig. 5 bis 7 erkennbaren Tankwandung 66 eines allgemein mit 68 bezeichneten Tanks festgelegt wird.

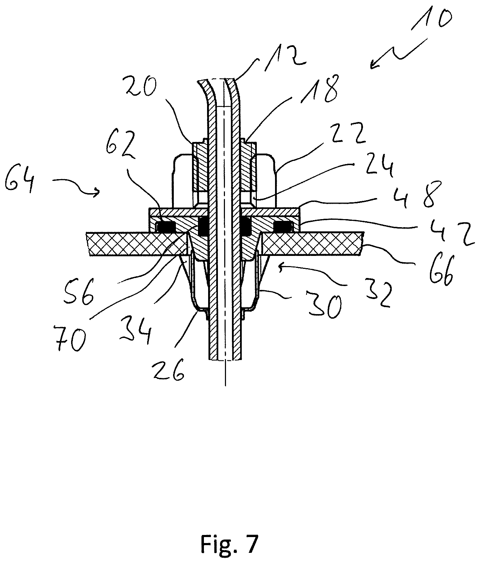

In der Tankwandung 66 ist eine Tanköffnung 70 gebildet, welche beispielsweise nachträglich in einem an einem Fahrzeug bereits installierten Tank erzeugt werden kann. Die Tanköffnung 70 ist derart dimensioniert, dass der Spreizansatz 48 des Widerlagerelements 42 in diese eingreifend positioniert werden kann. Ferner ist die Tanköffnung 70 derart dimensioniert, dass in dem nachfolgend in Bezug auf die Fig. 7 beschriebenen Zustand, in welchem die Tankanschlussbaugruppe 10 am Tank 68 festgelegt ist, die durch den Spreizansatz 48 aufgespreizten Spreizschenkels 26 einen die Tanköffnung 70 umgebenden Wandungsbereich der Tankwandung 66 an einer dem Tankinneren zugewandten ersten Seite 72 der Tankwandung 66 mit ihren Widerhakenelementen 34 übergreifen.

Vor dem Einführen der Tankanschlussbaugruppe 10 in die Tanköffnung 70 ist das zweite Spannelement 22 beispielsweise vom ersten Spannelement 18 entfernt oder in eine in Fig. 5 erkennbare Position gebracht, in welcher keine Abstützwechselwirkung zwischen dem zweiten Spannelement 22 und dem Kompressionselement 58 besteht. Über das Kompressionselement 58 kann das Widerlagerelement 42 sich somit in einer Montage-Vorbereitungsposition axial am ersten Spannelement 18 abstützen. In dieser Montage-Vorbereitungsposition ist das Widerlagerelement 42 derart bezüglich des Spreizelements 26 positioniert, dass der Spreizansatz 48 die Spreizschenkel 30 axial im Wesentlichen nicht überlappt und diese in einem Grundzustand sind, in welchem sie grundsätzlich radial elastisch einfedern können, wenn die Tankanschlussbaugruppe 10 mit dem Rohrabschnitt 14 des Anschlussrohrs 12 und dem daran festgelegten Spreizelement 26 durch die Tanköffnung 70 hindurchgeführt wird. Aufgrund der Wirkung der Einführschrägen 40 werden in Verlaufe dieser Bewegung die Spreizschenkel 30 nach radial innen bewegt, bis das Spreizelement 26 im Wesentlichen vollständig an der ersten Seite 72 der Tankwandung 66 positioniert ist. Ist dieser Zustand erreicht, federn die Spreizschenkel 30 wieder nach radial außen, so dass in dem dann wiedererlangten Grundzustand beispielsweise die an den Widerhakenelementen 34 vorgesehenen Widerhakenkanten 46 die Tankwandung 66 an ihrer ersten Seite 72 hintergreifen.

Nachfolgend wird das zweite Spannelement 22 auf das erste Spannelement 18 geschraubt und dadurch in Richtung auf das Spreizelement 26 zu verlagert. Im Zuge dieser Bewegung kommt, wie in Fig. 6 dargestellt, das Widerlagerelement 42 bzw. das daran vorgesehene zweite Dichtelement 62 zur Anlage an einer nach außen orientierten zweiten Seite 74 der Tankwandung 66, so dass das Widerlagerelement 42 seine Widerlagerwirkung entfalten kann.

Bei weiter fortgesetzter Schraubbewegung des zweiten Spannelements 22 verlagert unter Abstützung des Widerlagerelements 42 über das zweite Dichtelement 62 an der Tankwandung 66 das Anschlussrohr 12 mit seinem Rohrabschnitt 14 sich in Richtung aus dem Tank heraus, also in Fig. 6 nach oben. Das Spreizelement 26 nähert sich dabei mit seinen Spreizschenkeln 30 dem Spreizansatz 48 am Widerlagerelement 42 an, bis ein Kontakt zwischen den Spreizschenkeln 30 und dem Spreizansatz 48 entsteht. Bei weiter fortgesetzter Schraubbewegung bewegen sich die Spreizschenkel 30 entlang des Spreizansatzes 48 in Richtung auf das erste Spannelement 18 zu und werden dabei nach radial außen aufgespreizt. Die bereits zuvor die Tankwandung 66 an der ersten Seite 72 übergreifenden Widerhakenelemente 34 werden dadurch noch weiter nach radial außen verlagert, so dass ein verstärkter Übergriff an der ersten Seite 72 erlangt wird.

Um ein übermäßiges Aufspreizen bzw. ein Abgleiten der Spreizschenkel 30 zu vermeiden, weisen diese jeweils einen axial in Richtung auf das erste Spannelement zu über die Widerhakenbereiche 38 hervorstehenden Aufspreizbegrenzungsabschnitt 76 auf, welcher sich gegen eine Innenumfangsfläche der Tanköffnung 70 legen kann und somit die maximale Aufspreizung der Spreizschenkel 30 definiert. Bei bereits an der ersten Seite 72 der Tankwandung 66 sich abstützenden Widerhakenelementen 34 führt eine weitere Schraubbewegung des zweiten Spannelements 22 dann zu der vorangehend bereits beschriebenen Kompression der beiden Dichtelemente 56, 62, bis das Kompressionselement 58 an der zweiten Axialseite 54 des Widerlagerelements 42 anliegt und das Widerlagerelement 42 mit seiner ersten Axialseite 46 an der zweiten Seite 74 der Tankwandung 66 anliegt.

In diesem Zustand ist die Tankanschlussbaugruppe 10 fest und definiert an der Tankwandung 66 getragen, wobei die Position der Tankanschlussbaugruppe 10 nicht durch die Kompression eines elastischen Bauteils definiert ist, sondern durch definiert aneinander sich abstützende, starre Bauteile. Auch über die Betriebslebensdauer hinweg können daher in einem elastischen Material auftretende Ermüdungserscheinungen nicht zu einer Positionsveränderung der Tankanschlussbaugruppe 10 führen. Auch besteht kein durch die Elastizität eines Dichtelements eingeführtes Bewegungsspiel zwischen der Tankanschlussbaugruppe 10 und der Tankwandung 66.

Aus Gründen der Stabilität und der Korrosionsfestigkeit sind vorzugsweise alle Komponenten der Tankanschlussbaugruppe 10 mit Ausnahme der beiden Dichtelemente 56, 52 als Metallteile ausgeführt. Das Spreizelement 26 kann in einfacher, kostengünstiger und gleichwohl stabiler Art und Weise als Blechumformteil bereitgestellt sein, und das Widerlagerelement 42 und das Kompressionselement 58 sind vorzugsweise als Edelstahl-Bauteile ausgeführt, ebenso wie das erste Spannelement 18 und das zweite Spannelement 22.

Das erste Spannelement 18 kann, wie dargestellt, als separates Bauteil ausgebildet und beispielsweise durch Materialschluss am Anschlussrohr 12 festgelegt sein. Alternativ kann das erste Spannelement 18 auch dadurch am Anschlussrohr 12 festgelegt sein, dass es mit diesem integral, also als ein Materialstück ausgebildet und beispielsweise durch Verformung oder/und spanabhebende Bearbeitung des Anschlussrohrs bereitgestellt ist.

## Patentansprüche

1. Tankanschlussbaugruppe, insbesondere für ein brennstoffbetriebenes Fahrzeugheizgerät, umfassend ein durch eine Tanköffnung (70) in einer Tankwandung (66) hindurchzuführendes, in Richtung einer Rohrlängsachse (L) sich erstreckendes Anschlussrohr (12) und eine Befestigungsbaugruppe (64) an dem Anschlussrohr (12) zur Festlegung an der Tankwandung (66) im Bereich der Tanköffnung (70), wobei die Befestigungsbaugruppe (64) umfasst:
- ein an dem Anschlussrohr (12) festgelegtes erstes Spannelement (18),
- ein zweites Spannelement (22), wobei das zweite Spannelement (22) mit dem ersten Spannelement (18) derart in Eingriff steht oder bringbar ist, dass eine Drehung des zweiten Spannelements (22) bezüglich des ersten Spannelements (22) um die Rohrlängsachse eine Bewegung des zweiten Spannelements (18) bezüglich des ersten Spannelements in Richtung der Rohrlängsachse (L) bewirkt, **dadurch gekennzeichnet, dass** die Befestigungsbaugruppe (64) weiter umfasst:
- ein an dem Anschlussrohr (12) in axialem Abstand zu dem ersten Spannelement (18) wenigstens in Richtung von dem ersten Spannelement (18) weg festgelegtes Spreizelement (26) zur Abstützung an einer ersten Seite (72) einer Tankwandung (66),
- ein zwischen dem ersten Spannelement (18) und dem Spreizelement (26) axial bewegbar angeordnetes, bezüglich des ersten Spannelements (18) axial in Richtung von dem Spreizelement (26) weg über das zweite Spannelement (22) abstützbares oder abgestütztes Widerlagerelement (42) mit einem ersten Dichtbereich (57) zum Bereitstellen eines dichten Abschlusses bezüglich einer Außenumfangsfläche des Anschlussrohrs (12) und einem zweiten Dichtbereich (63) zum Bereitstellen eines dichten Abschlusses bezüglich einer von der ersten Seite (72) abgewandten zweiten Seite (74) der Tankwandung.

2. Tankanschlussbaugruppe nach Anspruch 1, **dadurch gekennzeichnet, dass** das Spreizelement (26) einen das Anschlussrohr (12) umgebenden, ringartigen Befestigungsbereich (28) und eine Mehrzahl von mit Umfangsabstand zueinander angeordneten und von dem Befestigungsbereich (28) sich auf das erste Spannelement (18) zu erstreckenden, radialelastischen Spreizschenkeln (30) umfasst, wobei an jedem Spreizschenkel (30) ein nach radial außen hervorstehender Widerhakenbereich (38) vorgesehen ist.

3. Tankanschlussbaugruppe nach Anspruch 2, **dadurch gekennzeichnet, dass** jeder Widerhakenbereich (32) eine von dem Befestigungsbereich (28) abgewandt orientierte Widerhaken-Abstützseite (38) zur Abstützung an der ersten Seite (72) der Tankwandung (66) in einem die Tanköffnung (70) umgebenden Wandungsbereich umfasst, oder/und dass jeder Widerhakenbereich (32) eine dem Befestigungsbereich (28) zugewandte Einführschräge (40) umfasst.

4. Tankanschlussbaugruppe nach Anspruch 2 oder 3, **dadurch gekennzeichnet, dass** an jedem Spreizschenkel (30) ein in Richtung vom Befestigungsbereich (28) weg über den Widerhakenbereich (32) hinaus sich erstreckender Aufspreizbegrenzungsabschnitt (76) vorgesehen ist.

5. Tankanschlussbaugruppe nach einem der vorangehenden Ansprüche, **dadurch gekennzeichnet, dass** das Widerlagerelement (42) einen ringscheibenartigen Widerlagerelementkörper (44) umfasst, wobei an einer dem Spreizelement (26) zugewandten ersten Axialseite (46) des Widerlagerelementkörpers (44) ein in Richtung auf das Spreizelement (76) zu hervorstehender, von dem Widerlagerelementkörper (44) weg auf das Spreizelement (26) zu sich verjüngender Spreizansatz (48) vorgesehen ist.

6. Tankanschlussbaugruppe nach Anspruch 5, **dadurch gekennzeichnet, dass** der Spreizansatz (48) das Anschlussrohr (12) ringartig umgibt, oder/und dass der Spreizansatz (48) sich in Richtung auf das Spreizelement (26) zu im Wesentlichen konisch verjüngend ausgebildet ist.

7. Tankanschlussbaugruppe nach Anspruch 5 oder 6, **dadurch gekennzeichnet, dass** das Widerlagerelement (42) in einer Montage-Vorbereitungsposition bezüglich des ersten Spannelements (18) derart abstützbar ist, dass der Spreizansatz (48) das Spreizelement (26) axial im Wesentlichen nicht überlappt oder/und das Spreizelement (26) nicht nach radial außen aufspreizt oder/und eine Verformung des Spreizelements (26) nach radial innen zulässt.

8. Tankanschlussbaugruppe nach Anspruch 5, 6 oder 7, **dadurch gekennzeichnet, dass** zur Bereitstellung des ersten Dichtbereichs (57) an dem Widerlagerelementkörper (44) an einer Anschlussrohr-Aufnahmeöffnung (50) eine nach radial innen offene, die Rohrlängsachse (L) ringartig umgebende und ein erstes ringartiges Dichtelement (56) aufnehmende erste Dichtelement-Aufnahmeaussparung (52) vorgesehen ist, oder/und dass zur Bereitstellung des zweiten Dichtbereichs (63) an der ersten Axialseite (46) des Widerlagerelementkörpers (44) eine zur ersten Axialseite (46) offene, die Rohrlängsachse (L) ringartig umgebende und ein zweites ringartiges Dichtelement (62) aufnehmende zweite Dichtelement-Aufnahmeaussparung (60) vorgesehen ist.

9. Tankanschlussbaugruppen nach Anspruch 8, **dadurch gekennzeichnet, dass** die erste Dichtelement-Aufnahmeaussparung (52) an einer von der ersten Axialseite (46) abgewandten zweiten Axialseite (54) des Widerlagerelementkörpers (44) axial offen ist, und dass axial zwischen dem Widerlagerelement (42) und dem ersten Spannelement (18) ein die zweite Axialseite (54) des Widerlagerelementkörpers (44) wenigstens im Bereich der ersten Dichtelement-Aufnahmeaussparung (52) überdeckendes Kompressionselement (58) angeordnet ist.

10. Tankanschlussbaugruppe nach einem der vorangehenden Ansprüche,
**dadurch gekennzeichnet, dass** das Spreizelement (26) ein Blechumformteil ist.

11. Tankanschlussbaugruppe nach einem der vorangehenden Ansprüche,
**dadurch gekennzeichnet, dass** das erste Spannelement (18) ein Außengewinde-Spannelement mit einem Außengewinde (20) ist, und dass das zweite Spannelement (22) ein Innengewinde-Spannelement mit einem mit dem Außengewinde (20) in Gewindeeingriff stehenden Innengewinde (24) ist.

12. Tankanordnung, insbesondere zur Versorgung eines brennstoffbetriebenen Fahrzeugheizgeräts mit Brennstoff, umfassend einen Tank (68) mit einer Tankwandung (66) und einer in der Tankwandung (66) ausgebildeten Tanköffnung (70) sowie eine an der Tankwandung (66) im Bereich der Tanköffnung (70) festgelegte Tankanschlussbaugruppe (10) nach einem der vorangehenden Ansprüche.

## Claims

1. Tank connection assembly, in particular for a fuel-operated vehicle heater, comprising a connection pipe (12) to be passed through a tank opening (70) in a tank wall (66) and extending in the direction of a pipe longitudinal axis (L), and a fastening assembly (64) on the connection pipe (12) for fixing to the tank wall (66) in the region of the tank opening (70), wherein the fastening assembly (64) comprises:
- a first clamping element (18) fixed to the connection pipe (12),
- a second clamping element (22), wherein the second clamping element (22) is engaged with or engageable with the first clamping element (18) such that rotation of the second clamping element (22) relative to the first clamping element (22) about the pipe longitudinal axis causes movement of the second clamping element (18) relative to the first clamping element in the direction of the pipe longitudinal axis (L), **characterized in that** the fastening assembly (64) further comprises:
- an expansion element (26) fixed to the connection pipe (12) at an axial distance from the first clamping element (18) at least in the direction away from the first clamping element (18) for support on a first side (72) of a tank wall (66),
- an abutment element (42) arranged axially movable between the first clamping element (18) and the expansion element (26), supportable or supported via the second clamping element (22) with respect to the first clamping element (18) axially in a direction away from the expansion element (26), with a first sealing portion (57) for providing a tight seal with respect to an outer circumferential surface of the connection pipe (12) and a second sealing region (63) for providing a tight seal with respect to a second side (74) of the tank wall facing away from the first side (72).

2. Tank connection assembly according to claim 1, **characterized in that** the expansion element (26) comprises an annular fastening region (28) surrounding the connection pipe (12) and a plurality of circumferentially spaced radially resilient expansion legs (30) extending from the fastening region (28) towards the first clamping element (18), wherein a radially outwardly projecting barb region (38) is provided on each expansion leg (30).

3. Tank connection assembly according to claim 2, **characterized in that** each barb region (32) comprises a barb support side (38) oriented away from the fastening region (28) for support on the first side (72) of the tank wall (66) in a wall region surrounding the tank opening (70), or/and **in that** each barb region (32) comprises an insertion slope (40) facing towards the fastening region (28).

4. Tank connection assembly according to claim 2 or 3, **characterized in that** an expansion limiting portion (76) extending in a direction away from the fastening region (28) beyond the barb region (32) is provided on each expansion leg (30).

5. Tank connection assembly according to one of the preceding claims, **characterized in that** the abutment element (42) comprises an annular disc-like abutment element body (44), wherein an expansion attachment (48) is provided on a first axial side (46) of the abutment element body (44) facing towards the expansion element (76) and tapering away from the abutment element body (44) towards the expansion element (26).

6. Tank connection assembly according to claim 5, **characterized in that** the expansion attachment (48) surrounds the connection pipe (12) in an annular manner, and/or in that the expansion attachment (48) is designed to taper substantially conically in the direction towards the expansion element (26).

7. Tank connection assembly according to claim 5 or 6, **characterized in that** the abutment element (42) can be supported in a mounting preparation position with respect to the first clamping element (18) in such a way that the expansion attachment (48) does not substantially overlap the expansion element (26) axially or/and does not expand the expansion element (26) radially outwards or/and permits deformation of the expansion element (26) radially inwards.

8. Tank connection assembly according to claim 5, 6 or 7, **characterized in that**, in order to provide the first sealing region (57) on the abutment element body (44), a first sealing element receiving recess (52) open radially inwards, surrounding the pipe longitudinal axis (L) in an annular manner and receiving a first annular sealing element (56) is provided on a connection pipe receiving opening (50), or/and **in that**, in order to provide the second sealing region (63), a second sealing element receiving recess (60) open towards the first axial side (46), surrounding the pipe longitudinal axis (L) in an annular manner and receiving a second annular sealing element (62) is provided on the first axial side (46) of the abutment element body (44).

9. Tank connection assemblies according to claim 8, **characterized in that** the first sealing element receiving recess (52) is axially open on a second axial side (54) of the abutment element body (44) facing away from the first axial side (46), and **in that** a compression element (58) covering the second axial side (54) of the abutment element body (44) at least in the region of the first sealing element receiving recess (52) is arranged axially between the abutment element (42) and the first clamping element (18).

10. Tank connection assembly according to one of the preceding claims, **characterized in that** the expansion element (26) is a sheet metal forming part.

11. Tank connection assembly according to one of the preceding claims, **characterized in that** the first clamping element (18) is an externally threaded clamping element having an external thread (20), and **in that** the second clamping element (22) is an internally threaded clamping element having an internal thread (24) in threaded engagement with the external thread (20).

12. Tank arrangement, in particular for supplying fuel to a fuel-operated vehicle heater, comprising a tank (68) having a tank wall (66) and a tank opening (70) formed in the tank wall (66), as well as a tank connection assembly (10) fixed to the tank wall (66) in the region of the tank opening (70) according to one of the preceding claims.

## Revendications

1. Ensemble de raccordement de réservoir, en particulier pour un appareil de chauffage de véhicule fonctionnant au carburant, comprenant un tube de raccordement (12) à faire passer à travers une ouverture de réservoir (70) dans une paroi de réservoir (66) et s'étendant dans la direction d'un axe longitudinal de tube (L) et un ensemble de fixation (64) sur le tube de raccordement (12) pour la fixation sur la paroi de réservoir (66) dans la zone de l'ouverture de réservoir (70), l'ensemble de fixation (64) comprenant :
- un premier élément de serrage (18) fixé sur le tube de raccordement (12),
- un deuxième élément de serrage (22), dans lequel le deuxième élément de serrage (22) est en prise ou peut être amené en prise avec le premier élément de serrage (18) de telle sorte qu'une rotation du deuxième élément de serrage (22) par rapport au premier élément de serrage (22) autour de l'axe longitudinal du tube provoque un mouvement du deuxième élément de serrage (18) par rapport au premier élément de serrage dans la direction de l'axe longitudinal de tube (L), **caractérisé en ce que** l'ensemble de fixation (64) comprend en outre :
- un élément d'écartement (26) fixé sur le tube de raccordement (12) à une distance axiale du premier élément de serrage (18), au moins dans la direction opposée au premier élément de serrage (18), pour l'appui sur un premier côté (72) d'une paroi de réservoir (66),
- un élément de butée (42) arrangé mobile axialement entre le premier élément de serrage (18) et l'élément d'écartement (26), pouvant être soutenu ou supporté par rapport au premier élément de serrage (18) axialement dans la direction s'éloignant de l'élément d'écartement (26) par l'intermédiaire du deuxième élément de serrage (22), avec une première zone d'étanchéité (57) pour fournir une fermeture étanche par rapport à une surface circonférentielle extérieure du tube de raccordement (12) et une deuxième zone d'étanchéité (63) pour fournir une fermeture étanche par rapport à un deuxième côté (74) de la paroi de réservoir opposé au premier côté (72).

2. Ensemble de raccordement de réservoir selon la revendication 1, **caractérisé en ce que** l'élément d'écartement (26) comprend une zone de fixation (28) annulaire entourant le tube de raccordement (12) et une pluralité de branches d'écartement (30) radialement élastiques, disposées à distance les unes des autres sur la circonférence et s'étendant de la zone de fixation (28) vers le premier élément de serrage (18), dans lequel une zone de barbelure (38) faisant saillie radialement vers l'extérieur est prévue sur chaque branche d'écartement (30).

3. Ensemble de raccordement de réservoir selon la revendication 2, **caractérisé en ce que** chaque zone de barbelure (32) comprend une zone de barbelure (38) orienté à l'opposé de la zone de fixation (28) pour l'appui sur le premier côté (72) de la paroi de réservoir (66) dans une zone de paroi entourant l'ouverture de réservoir (70), ou/et **en ce que** chaque zone de barbelure (32) comprend un chanfrein d'introduction (40) orienté vers la zone de fixation (28).

4. Ensemble de raccordement de réservoir selon la revendication 2 ou 3, **caractérisé en ce qu'**il est prévu sur chaque branche d'écartement (30) une section de limitation d'écartement (76) s'étendant dans la direction opposée à la zone de fixation (28) au-delà de la zone de barbelure (32).

5. Ensemble de raccordement de réservoir selon l'une des revendications précédentes, **caractérisé en ce que** l'élément de butée (42) comprend un corps d'élément de butée (44) en forme de disque annulaire, dans lequel une saillie d'écartement (48) faisant saillie en direction de l'élément d'écartement (76) et se rétrécissant en s'éloignant du corps d'élément de butée (44) vers l'élément d'écartement (26) est prévue sur un premier côté axial (46) du corps d'élément de butée (44) tourné vers l'élément d'écartement (26).

6. Ensemble de raccordement de réservoir selon la revendication 5, **caractérisé en ce que** la saillie d'écartement (48) entoure le tube de raccordement (12) de manière annulaire, ou/et **en ce que** la saillie d'écartement (48) est réalisé en se rétrécissant sensiblement en cône en direction de l'élément d'écartement (26).

7. Ensemble de raccordement de réservoir selon la revendication 5 ou 6, **caractérisé en ce que** l'élément de butée (42) peut être soutenu dans une position de préparation au montage par rapport au premier élément de serrage (18) de telle sorte que la saillie d'écartement (48) ne chevauche pas l'élément d'écartement (26) dans le sens axial ou/et n'écarte pas l'élément d'écartement (26) vers l'extérieur dans le sens radial ou/et autorise une déformation de l'élément d'écartement (26) vers l'intérieur dans le sens radial.

8. Ensemble de raccordement de réservoir selon la revendication 5, 6 ou 7, **caractérisé en ce que**, pour mettre à disposition la première zone d'étanchéité (57) sur le corps d'élément de butée (44), il est prévu sur une ouverture de réception de tube de raccordement (50) un premier évidement de réception d'élément d'étanchéité (52) ouvert radialement vers l'intérieur, entourant l'axe longitudinal de tube (L) de manière annulaire et recevant un premier élément d'étanchéité (56) de type annulaire, ou/et **en ce que**, pour la mise à disposition de la deuxième zone d'étanchéité (63), il est prévu sur le premier côté axial (46) du corps d'élément de butée (44) un deuxième évidement de réception d'élément d'étanchéité (60) ouvert vers le premier côté axial (46), entourant de manière annulaire l'axe longitudinal du tube (L) et recevant un deuxième élément d'étanchéité annulaire (62).

9. Ensembles de raccordement de réservoir selon la revendication 8, **caractérisés en ce que** le premier évidement de réception d'élément d'étanchéité (52) est ouvert axialement sur un deuxième côté axial (54) du corps d'élément de butée (44), opposé au premier côté axial (46), et **en ce qu'**un élément de compression (58) recouvrant le deuxième côté axial (54) du corps d'élément de butée (44) au moins dans la zone du premier évidement de réception d'élément d'étanchéité (52) est disposé axialement entre l'élément de butée (42) et le premier élément de serrage (18).

10. Ensemble de raccordement de réservoir selon l'une des revendications précédentes, **caractérisé en ce que** l'élément d'écartement (26) est une pièce de formage de tôle.

11. Ensemble de raccordement de réservoir selon l'une quelconque des revendications précédentes, **caractérisé en ce que** le premier élément de serrage (18) est un élément de serrage à filetage extérieur comportant un filetage extérieur (20), et **en ce que** le deuxième élément de serrage (22) est un élément de serrage à filetage intérieur comportant un filetage intérieur (24) en prise par vissage avec le filetage extérieur (20).

12. Agencement de réservoir, en particulier pour l'alimentation en carburant d'un appareil de chauffage de véhicule fonctionnant au carburant, comprenant un réservoir (68) avec une paroi de réservoir (66) et une ouverture de réservoir (70) formée dans la paroi de réservoir (66) ainsi qu'un ensemble de raccordement de réservoir (10) fixé sur la paroi de réservoir (66) dans la zone de l'ouverture de réservoir (70) selon l'une des revendications précédentes.
